# EUROPEAN PATENT APPLICATION

(11) **EP 1 772 623 A1**
(43) Date of publication of application: **11.04.2007**
(21) Application number: 06255184.1
(22) Date of filing: 09.10.2006
(51) Int. Cl.: F03D 7/02, F03D 11/00, F01D 5/14

(54) **Active flow control for wind turbine blades**

(30) Priority: 10.10.2005 US 247811
(71) Applicant: General Electric Company, Schenectady, NY 12345 (US)
(72) Inventor: Herr, Stefan, Greenville South Carolina 29615 (US); Giguere, Philippe, Simpsonville South Carolina 29681-4288 (US); Gupta, Anurag, Clifton Park New York 12065 (US)
(74) Representative: Bedford, Grant Richard

(57) **Abstract**

A wind turbine (100) with at least one blade (108) having an active flow control actuator (300) configured to increase an angle of attack range in which the blade or blades can generate torque without flow separation, using the flow control actuator to adjust this angle of attack range in accordance with load.

## Description

This invention relates generally to wind turbines, and more particularly to methods and apparatus for enhancing power output from wind turbines.

Recently, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a truss or tubular tower. Utility scale grade wind turbines (i.e., wind turbines designed to provide electrical power to a utility grid) can have large rotors (e.g., 70 or more meters in diameter). Blades on these rotors transform wind energy into a rotational torque or force that drives one or more generators that may be rotationally coupled to the rotor through a gearbox. In some known embodiments, the gearbox steps up the inherently low rotational speed of the turbine rotor for the generator to efficiently convert mechanical energy to electrical energy, which is fed into a utility grid.

With increasing wind speed, blades with a fixed tip speed (near rated power) comprise larger regions of separated flow (near rated power). These larger regions of separated flow limit the amount of power output that can be generated in a wind turbine below rated power. Blades with a slender planform are also subject to a limit in possible rated power for much the same reason.

Known wind turbine blades utilize passive flow control devices or none at all. In at least one known configuration, vortex generators are used to increase the power output, although it is known that passive devices like vortex generators or Gurney flaps increase power and loads.

One aspect of the present invention therefore provides a method for operating a wind turbine with at least one blade. The method includes providing at least one blade with at least one active flow control actuator configured to increase an angle of attack range in which the blade or blades can generate torque without flow separation, and using the flow control actuator to adjust this angle of attack range in accordance with load.

In another aspect, the present invention provides a blade for a wind turbine having an active flow control actuator configured to increase an angle of attack range of said blade.

In yet another aspect, the present invention provides a wind turbine that has at least one blade. The blade or blades have a flow control actuator to increase an angle of attack range in which the blade or blades can generate torque without flow separation. The wind turbine also has a controller. The controller is configured to control the flow control actuator to facilitate increased power output in this angle of attack in accordance with control inputs such as power and load.

Various embodiments and aspects of the present invention will now be described in connection with the accompanying drawings, in which:
Figure 1 is a drawing of an exemplary configuration of a wind turbine.
Figure 2 is a cut-away perspective view of a nacelle of the exemplary wind turbine configuration shown in Figure 1.
Figure 3 is a partial cut-away view of a blade of the wind turbine configuration of Figure 1.
Figure 4 is a cross-sectional view of the wind turbine blade shown in Figure 3.
Figure 5 is a power curve of a representative wind turbine of an embodiment of the present invention.

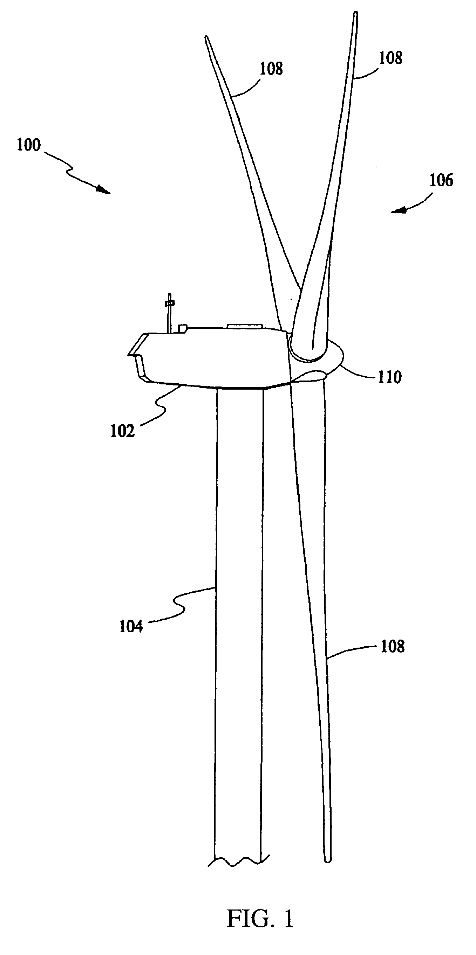

In some configurations and referring to Figure 1, a wind turbine 100 comprises a nacelle 102 housing a generator (not shown in Figure 1). Nacelle 102 is mounted atop a tall tower 104, only a portion of which is shown in Figure 1. Wind turbine 100 also comprises a rotor 106 that includes one or more rotor blades 108 attached to a rotating hub 110. Although wind turbine 100 illustrated in Figure 1 includes three rotor blades 108, there are no specific limits on the number of rotor blades 108 required by the present invention.

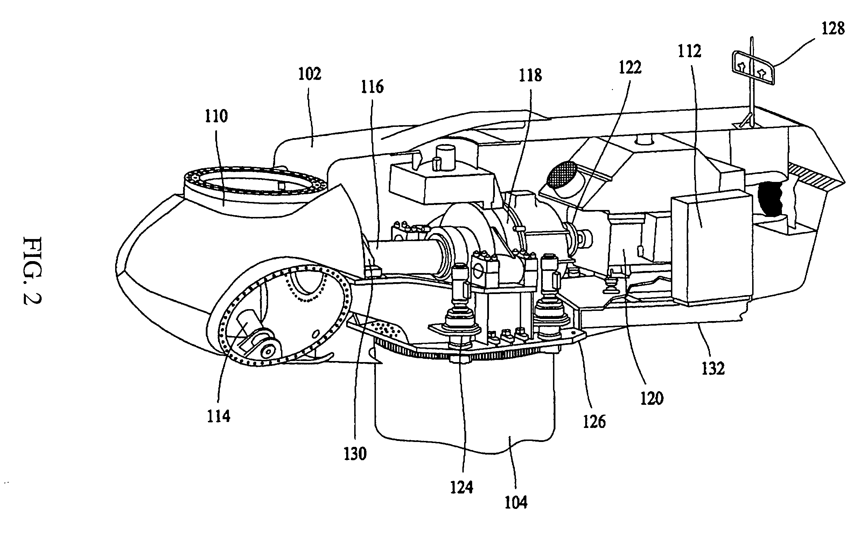

In some configurations and referring to Figure 2, various components are housed in nacelle 102 atop tower 104 of wind turbine 100. The height of tower 104 is selected based upon factors and conditions known in the art. In some configurations, one or more microcontrollers within control panel 112 comprise a control system used for overall system monitoring and control. Alternative distributed or centralized control architectures are used in some configurations.

In some configurations, a variable blade pitch drive 114 is provided to control the pitch of blades 108 (not shown in Figure 2) that drive hub 110 as a result of wind. In some configurations, hub 110 receives three blades 108, but other configurations can utilize any number of blades. In some configurations, the pitches of blades 108 are individually controlled by blade pitch drive 114. Hub 110 and blades 108 together comprise wind turbine rotor 106.

The drive train of the wind turbine includes a main rotor shaft 116 (also referred to as a "low speed shaft") connected to hub 110 via main bearing 130 and (in some configurations), at an opposite end of shaft 116 to a gear box 118. Gear box 118, in some configurations, utilizes a dual path geometry to drive an enclosed high speed shaft. In other configurations, main rotor shaft 116 is coupled directly to generator 120. The high speed shaft (not shown in Figure 2) is used to drive generator 120, which is mounted on main frame 132. In some configurations, rotor torque is transmitted via coupling 122.

Yaw drive 124 and yaw deck 126 provide a yaw orientation system for wind turbine 100. A wind vane and anemometer on the nacelle of the turbine and/or meteorological mast 128 provide information for turbine control system in control panel 112, which may include wind direction and/or wind speed. In some configurations, the yaw system is mounted on a flange provided atop tower 104.

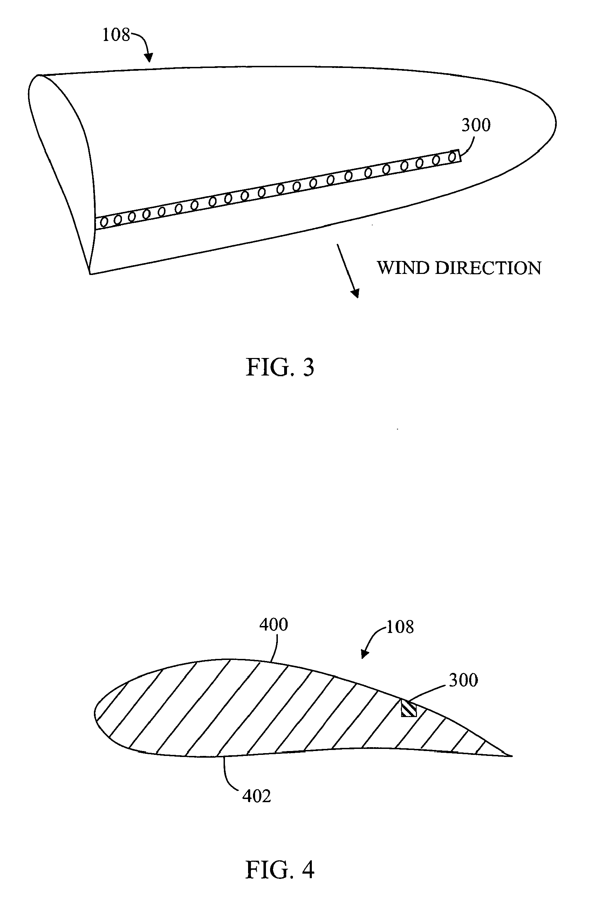

In some configurations and referring to Figures 3 and 4, at least one, blade or blades 108 of wind turbine 100 is/are provided with an active flow control (AFC) actuator 300 that is configured to increase an angle of attack range in which blade 108 can generate torque without air flow separation on blade 108. Flow control actuator 300 is used, for example, to enable an increased angle of attack range where power can be generated in accordance with controller input such as, but not limited to, power output and loading of blade 108. Some configurations use a controller in control panel 112 along with a sensor (not shown in the Figures) to effectuate control over flow control actuator 300. In some configurations of the present invention, flow control actuator 300 is used (e.g., controlled by the controller in control panel 112) to limit operational loads near rated power of wind turbine 100. In some configurations, flow control actuator 300 is used to provide a decrease in parked loads. In some configurations, flow control actuator is used to both limit operational loads near rated power of wind turbine 100 and to effect a decrease in parked loads.

In some configurations, active control actuator 300 is provided on a suction side 400 (as opposed to a pressure side 402) at a position selected empirically or otherwise to maximize the increase in the angle of attack range. For example, in some configurations of blades 108, control actuator 300 is positioned at about 60% of the chord on the suction side 400 of blade 108 to facilitate maximizing the increase in the angle of attack range.

Blade 108 can have a low solidity (i.e., slender) planform. In case of failure of actuators 300 or controller in control panel 112, blade 108 can still be operated with a decrease in power output to avoid air flow separation or with flow separation and the consequent negative impact on loads and noise.

Active flow actuators 300 thus are useful in increasing the angle of attack region in which lift is generated without air flow separation. To control the parked and/or operational loads, actuators 300 can be turned off. A functional blade 108 shape enhanced by active flow actuators 300 leaves blade 108 still able to operate in the event or a failure of actuators 300 or their controller or controllers.

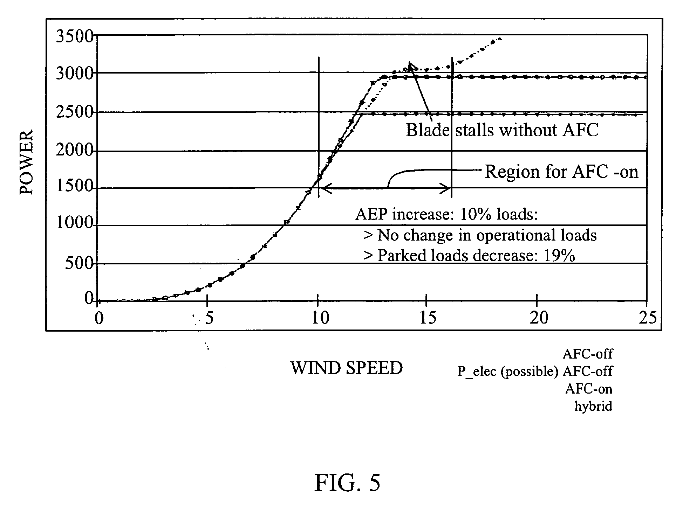

The power output of a wind turbine 100 is dependent upon the performance (especially lift) of a cross-section of blades 108. In some configurations and referring to the graph of Figure 5, the use of actuators 300 enhances the lift of a cross section in a selected region 500 of a power curve 502. In the event of a gust of wind, the lift may increase over a threshold 504. Actuator 300 can be turned off above this threshold to decrease lift so that it is within desired levels. A wind sensor such as meteorological boom 128 can be used to determine wind speeds and thus, whether lift is within acceptable range for actuator 300 to be operating.

It will thus be appreciated that configurations of various embodiments of the present invention allow an increase in angle of attack range that allow wind turbine blades to be produced with a low solidity (slender) planform that generates low parked loads, and that can limit operational loads near rated power. Active flow devices can be added to existing blades, as well. The use of a functional blade shape enhanced by active flow control devices enables a blade to operate even in case of a failure of the active flow control devices or associated controllers.

### PARTS LIST

| | |
|---|---|
| 100 | wind turbine |
| 102 | nacelle |
| 104 | tower |
| 106 | rotor |
| 108 | number of rotor blades |
| 110 | drive hub |
| 112 | control panel |
| 114 | blade pitch drive |
| 116 | main rotor shaft |
| 118 | gearbox |
| 120 | generator |
| 122 | coupling |
| 124 | yaw drive |
| 126 | yaw deck |
| 128 | meteorological mast |
| 130 | main bearing |
| 132 | main frame |
| 300 | actuator |
| 400 | suction side |
| 402 | pressure side |
| 500 | selected region |
| 502 | power curve |
| 504 | threshold |

## Claims

1. A blade (108) for a wind turbine (100) having an active flow control actuator (300) configured to increase an angle of attack range of said blade.

2. A blade (108) in accordance with Claim 1 having a slender planform.

3. A blade (108) in accordance with Claim 1 or Claim 2 wherein said active flow control actuator (300) is at about 60% chord on a suction side (400) of said blade.

4. A wind turbine (100) comprising at least one blade (108) having a flow control actuator (300) to increase an angle of attack range in which said at least one blade can generate torque without flow separation and a controller (112), said controller configured to control the flow control actuator to facilitate increased power output in a high angle of attack range in accordance with controller inputs.

5. A wind turbine (100) in accordance with Claim 4 wherein said controller is configured to limit operational loads near rated power of the wind turbine.

6. A wind turbine (100) in accordance with Claim 4 or Claim 5 wherein said controller is configured to effect a decrease in parked loads.

7. A wind turbine (100) in accordance with any one of Claims 4 to 6 wherein said blade is configured to continue to operate in case of a failure of said control system (112).

8. A wind turbine (100) in accordance with any one of Claims 4 to 7 wherein said active control actuator (300) is provided on a suction side (400) of said blade (108) at a position selected to maximize said increase in said angle of attack range.

9. A wind turbine (100) in accordance with any one of Claims 4 to 8 wherein said active control actuator (300) is provided at about 60% chord on a suction side (400) of said blade (108).

10. A wind turbine (100) in accordance with any one Claims 4 to 9 wherein said controller (112) is configured to both limit operational loads near rated power of the wind turbine and to effect a decrease in parked loads.
